# EUROPEAN PATENT APPLICATION

(11) **EP 4 687 246 A1**
(43) Date of publication of application: **04.02.2026**
(21) Application number: 25191304.2
(22) Date of filing: 23.07.2025
(51) Int. Cl.: H02J 1/10, H02J 7/00, H01M 10/44, H01M 10/42

(54) **SERIES-CONNECTED BATTERY PACK SYSTEM AND METHOD FOR EQUALIZING THE SAME**

(30) Priority: 30.07.2024 CN 202411033500
(71) Applicant: Solax Power Network Technology (Zhejiang) Co., Ltd., Hangzhou, Zhejiang 311500 (CN)
(72) Inventor: ZHU, Yifeng, Hangzhou, 311500 (CN); XIA, Jianli, Hangzhou, 311500 (CN); ZHAO, Jiali, Hangzhou, 311500 (CN)
(74) Representative: Murgitroyd & Company

(57) **Abstract**

A series-connected battery pack system includes a control circuit configured to: enter an equalization state when it is determined that a SOC difference between any battery packs is greater than a preset difference; determine a first voltage value of a first battery pack having a highest SOC value and a second voltage value of a second battery pack having a lowest SOC value; when the first and second voltage values meet a first condition, control the first battery pack to charge the second battery pack; enter a next equalization cycle when it is determine that real-time SOC values of all battery packs meet a second condition; and terminate the equalization state when it is determined that the SOC difference is less than or equal to the preset difference. Time required for equalization between battery packs may be reduced, and balancing effectiveness and an energy utilization rate may be improved.

## Description

### TECHNICAL FIELD

The present application relates to the field of energy storage technologies, and in particular, to a series-connected battery pack system and a method for equalizing the same.

### BACKGROUND

In current energy storage devices, in order to achieve large capacity, a plurality of battery packs are usually connected in series to form a series-connected battery pack system. Due to differences in capacity and performance among individual battery packs over time, a battery pack having a lowest capacity may ultimately limit overall charge and discharge of the entire series-connected battery pack system, thereby resulting in a reduction in overall capacity of the series-connected battery pack system.

In the prior art, passive balancing is generally used to mitigate the difference in capacity among the individual battery packs in the series-connected battery pack system. However, due to the large capacity of the battery packs, passive balancing effectiveness of the battery packs is very limited, and there further exist issues such as relatively long balancing time and relatively low energy utilization rate during a passive balancing process.

### SUMMARY

In view of this, the present application provides a series-connected battery pack system and a method for equalizing the same, aiming to reduce time required for equalization between battery packs, and improve balancing effectiveness and an energy utilization rate. Technical solutions of the present application are as follows.

A first aspect of the present application provides a series-connected battery pack system, including n battery packs, n bidirectional-isolated DCDC circuits, n switch units and a control circuit, where n is a positive integer greater than or equal to 2; the n battery packs are connected in series and then connected to a bus of the series-connected battery pack system, the n battery pack are connected to the n bidirectional-isolated DCDC circuits through the n switch units, respectively, the n bidirectional-isolated DCDC circuits are connected to an equalization bus, and the control circuit is connected to the n battery packs, the n bidirectional-isolated DCDC circuits and the n switch units; and the control circuit is configured to: enter an equalization state when it is determined that a SOC (State of Charge) difference between any battery packs is greater than a preset difference; during a current equalization cycle, determine a first battery pack having a highest SOC value and a first voltage value of the first battery pack, and determine a second battery pack having a lowest SOC value and a second voltage value of the second battery pack, when the first voltage value and the second voltage value meet a first condition, control both a switch unit corresponding to the first battery pack and a switch unit corresponding to the second battery pack to turn on, and control the first battery pack to charge the second battery pack through a corresponding bidirectional-isolated DCDC circuit; enter a next equalization cycle when it is determined that real-time SOC values of all battery packs meet a second condition; and terminate the equalization state when it is determined that the SOC difference between any battery packs is less than or equal to the preset difference.

In an embodiment of the present application, the control circuit includes a master controller and n slave controllers, each of the n slave controllers is connected to the master controller, a corresponding battery pack and a corresponding switch unit; and the slave controller is configured to: obtain a SOC value and a voltage value of the corresponding battery pack, and transmit the SOC value and the voltage value to the master controller; and in response to a turn-on command from the master controller, control the corresponding switch unit to turn on.

In an embodiment of the present application, the master controller is configured to: receive SOC values and voltage values of all battery packs; enter the equalization state when it is determined that the SOC difference between any SOC values is greater than the preset difference; during the current equalization cycle, determine the first battery pack having the highest SOC value and the first voltage value of the first battery pack, determine the second battery pack having the lowest SOC value and the second voltage value of the second battery pack, and when the first voltage value and the second voltage value meet the first condition, transmit the turn-on command to slave controllers corresponding to the first battery pack and the second battery pack, and control the first battery pack to charge the second battery pack through the corresponding bidirectional-isolated DCDC circuit; enter the next equalization cycle when it is determined that the real-time SOC values of all battery packs meet the second condition; and terminate the equalization state when it is determined that the SOC difference between any battery packs is less than or equal to the preset difference.

In an embodiment of the present application, the control circuit further includes a master auxiliary power source and n slave auxiliary power sources, and the master auxiliary power source is connected to the bus and the master controller, and each of the n the slave auxiliary power sources is connected to a corresponding battery pack and a corresponding slave controller; the master auxiliary power source is configured to convert a bus voltage of the bus into an auxiliary power supply voltage, and transmit the auxiliary power supply voltage to the master controller; and the slave auxiliary power source is configured to convert a voltage of the corresponding battery pack into an auxiliary power supply voltage, and transmit the auxiliary power supply voltage to the corresponding slave controller.

In an embodiment of the present application, the first condition includes: at least one of the first voltage value and the second voltage value being not greater than a preset voltage threshold.

In an embodiment of the present application, the second condition includes: a SOC value of the first battery pack being less than a SOC value of a third battery pack, and the third battery pack being a battery pack having a second-highest SOC value determined at beginning of the current equalization cycle; or a SOC value of the second battery pack being greater than a SOC value of a fourth battery pack, and the fourth battery pack being a battery pack having a second-lowest SOC value determined at beginning of the current equalization cycle.

In an embodiment of the present application, each of the n bidirectional-isolated DCDC circuits includes an auxiliary power unit, a micro control unit and a bidirectional-isolated DCDC unit, the auxiliary power unit is connected to a corresponding switch unit and the micro control unit, the micro control unit is connected to the control circuit and the bidirectional-isolated DCDC unit, and the bidirectional-isolated DCDC unit is connected to the corresponding switch unit and the equalization bus; the auxiliary power unit is configured to convert a voltage of a corresponding battery pack into an auxiliary power supply voltage after the corresponding switch unit is turned on, and transmit the auxiliary power supply voltage to the micro control unit; the micro control unit is configured to control the bidirectional-isolated DCDC unit to enter either a discharge operating state or a charge operating state after receiving the auxiliary power source voltage and a start command from the control circuit; and the bidirectional-isolated DCDC unit is configured to convert the voltage of the corresponding battery pack into a discharge voltage and output the discharge voltage to the equalization bus in the discharge operating state, and convert a bus voltage of the equalization bus into a charge voltage and output the charge voltage to the corresponding battery pack in the charge operating state.

In an embodiment of the present application, the control circuit is further configured to: when the first voltage value and the second voltage value do not meet the first condition, control the switch unit corresponding to the second battery pack to turn off and a bidirectional-isolated DCDC circuit corresponding to the second battery pack to stop operating, determine a target battery pack having a second-lowest SOC value determined at beginning of the current equalization cycle, control a switch unit corresponding to the target battery pack to turn on and a bidirectional-isolated DCDC circuit corresponding to the target battery pack to operate, and control the first battery pack to charge the target battery pack.

A second aspect of the present application provides a method for equalizing a series-connected battery pack system, the series-connected battery pack system includes n battery packs, n bidirectional-isolated DCDC circuits and n switch units, and n is a positive integer greater than or equal to 2; the n battery packs are connected in series and then connected to a bus of the series-connected battery pack system, the n battery pack are connected to the n bidirectional-isolated DCDC circuits through the n switch units, respectively, and the n bidirectional-isolated DCDC circuits are connected to an equalization bus; and the method includes: entering an equalization state when it is determined that a SOC difference between any battery packs is greater than a preset difference; during a current equalization cycle, determining a first battery pack having a highest SOC value and a first voltage value of the first battery pack, determining a second battery pack having a lowest SOC value and a second voltage value of the second battery pack, and when the first voltage value and the second voltage value meet a first condition, controlling both a switch unit corresponding to the first battery pack and a switch unit corresponding to the second battery pack to turn on, and controlling the first battery pack to charge the second battery pack through a corresponding bidirectional-isolated DCDC circuit; entering a next equalization cycle when it is determined that real-time SOC values of all battery packs meet a second condition; and terminating the equalization state when it is determined that the SOC difference between any battery packs is less than or equal to the preset difference.

In an embodiment of the present application, the first condition includes: at least one of the first voltage value and the second voltage value being not greater than a preset voltage threshold.

In an embodiment of the present application, the second condition includes: a SOC value of the first battery pack being less than a SOC value of a third battery pack, and the third battery pack being a battery pack having a second-highest SOC value determined at beginning of the current equalization cycle; or a SOC value of the second battery pack being greater than a SOC value of a fourth battery pack, and the fourth battery pack being a battery pack having a second-lowest SOC value determined at beginning of the current equalization cycle.

In an embodiment of the present application, the series-connected battery pack system further includes a master controller and n slave controllers, and each of the n slave controllers is connected to the master controller, a corresponding battery pack and a corresponding switch unit; and the method is implemented by the master controller, and the method further includes: obtaining, by the slave controller, a SOC value and a voltage value of the corresponding battery pack, transmitting, by the slave controller, the SOC value and the voltage value to the master controller, and in response to a turn-on command from the master controller, controlling, by the slave controller, the corresponding switch unit to turn on; and receiving, by the master controller, SOC values and voltage values of all battery packs.

In an embodiment of the present application, the series-connected battery pack system further includes a master auxiliary power source and n slave auxiliary power sources, the master auxiliary power source is connected to the bus and the master controller, and each of the n slave auxiliary power sources is connected to a corresponding battery pack and a corresponding slave controller; the master auxiliary power source is configured to convert a bus voltage of the bus into an auxiliary power supply voltage, and transmit the auxiliary power supply voltage to the master controller; and the slave auxiliary power source is configured to convert a voltage of the corresponding battery pack into an auxiliary power supply voltage, and transmit the auxiliary power supply voltage to the corresponding slave controller.

In an embodiment of the present application, each of the n bidirectional-isolated DCDC circuits includes an auxiliary power unit, a micro control unit and a bidirectional-isolated DCDC unit, the auxiliary power unit is connected to a corresponding switch unit and the micro control unit, the micro control unit is connected to the control circuit and the bidirectional-isolated DCDC unit, and the bidirectional-isolated DCDC unit is connected to the corresponding switch unit and the equalization bus; the auxiliary power unit is configured to convert a voltage of a corresponding battery pack into an auxiliary power supply voltage after the corresponding switch unit is turned on, and transmit the auxiliary power supply voltage to the micro control unit; the micro control unit is configured to control the bidirectional-isolated DCDC unit to enter either a discharge operating state or a charge operating state after receiving the auxiliary power supply voltage and a start command from the control circuit; and the bidirectional-isolated DCDC unit is configured to convert the voltage of the corresponding battery pack into a discharge voltage and output the discharge voltage to the equalization bus in the discharge operating state, and convert a bus voltage of the equalization bus into a charge voltage and output the charge voltage to the corresponding battery pack in the charge operating state.

A third aspect of the present application provides a computer storage medium, the computer storage medium stores a computer program, and when the computer program is executed by a processor, the processor is caused to execute the method for equalizing the series-connected battery pack system according to any one of embodiments in the first aspect.

In the series-connected battery pack system according to embodiments of the present application, a switch unit and a bidirectional-isolated DCDC circuit are set for each battery pack, such that each battery pack is connected to the equalization bus through the switch unit and the bidirectional-isolated DCDC circuit. After entering the equalization state, the control circuit may, as required, control the first battery pack having the highest SOC value to discharge to the equalization bus through the bidirectional-isolated DCDC circuit, and control the second battery pack having the lowest SOC value to receive the voltage from the equalization bus for charging through the bidirectional-isolated DCDC circuit, so as to realize a function of the first battery pack having the highest SOC value performing active charge equalization on the second battery pack having the lowest SOC value, thereby reducing time required for equalization between battery packs, and improving balancing effectiveness and an energy utilization rate. Moreover, during an equalization process, the first voltage value of the first battery pack and the second voltage value of the second battery pack being equalized are also monitored, and the equalization process continues only when the first voltage value and the second voltage value meet the preset condition, thereby avoiding abnormal voltages of battery packs due to an equalization process, and further preventing a normal operating state of a series-connected battery pack system from being affected.

### BRIEF DESCRIPTION OF THE DRAWINGS

FIG. 1 is a schematic block diagram of a first series-connected battery pack system according to an embodiment of the present application.
FIG. 2 is a schematic block diagram of a second series-connected battery pack system according to an embodiment of the present application.
FIG. 3 is a schematic block diagram of a third series-connected battery pack system according to an embodiment of the present application.
FIG. 4 is a schematic block diagram of a fourth series-connected battery pack system according to an embodiment of the present application.
FIG. 5 is a schematic flowchart of a method for equalizing a series-connected battery pack system according to an embodiment of the present application.
FIG. 6 is a schematic flowchart of a method for equalizing a series-connected battery pack system according to another embodiment of the present application.
FIG. 7 is a schematic flowchart of a method for equalizing a series-connected battery pack system according to another embodiment of the present application.

### DETAILED DESCRIPTION OF THE EMBODIMENTS

It should be noted that in the embodiments of the present application, "at least one" refers to one or more, and "plurality of" refers to two or more than two. The terms "and/or" describes a relationship between associated objects, indicating that there may be three types of relationships. For example, A and/or B may represent: A exists alone, both A and B exist, or B exists alone, where A and B may be singular or plural. The terms "first", "second", "third", "fourth", etc. (if any) in the specification, claims and drawings of the present application are used to distinguish similar objects, but not to describe a specific order or sequence.

Additionally, it should be noted that a method disclosed in the embodiments of the present application or shown in the flowchart includes one or more steps for implementing the method, an execution order of a plurality of steps may be interchanged, and some steps may also be deleted without departing from the scope of the claims.

In current energy storage devices, in order to achieve large capacity, a plurality of battery packs are usually connected in series to form a series-connected battery pack system. Due to differences in capacity and performance among individual battery packs over time, a battery pack having a lowest capacity may ultimately limit overall charge and discharge of the entire series-connected battery pack system, thereby resulting in a reduction in overall capacity of the series-connected battery pack system.

In the prior art, passive balancing is generally used to mitigate the difference in capacity among the individual battery packs in the series-connected battery pack system. However, due to the large capacity of the battery packs, passive balancing effectiveness of the battery packs is very limited, and there further exist issues such as relatively long balancing time and relatively low energy utilization rate during a passive balancing process.

The embodiments of the present application provide a series-connected battery pack system and a method for equalizing the same, aiming to reduce time required for equalization between battery packs, and improve balancing effectiveness of and an energy utilization rate.

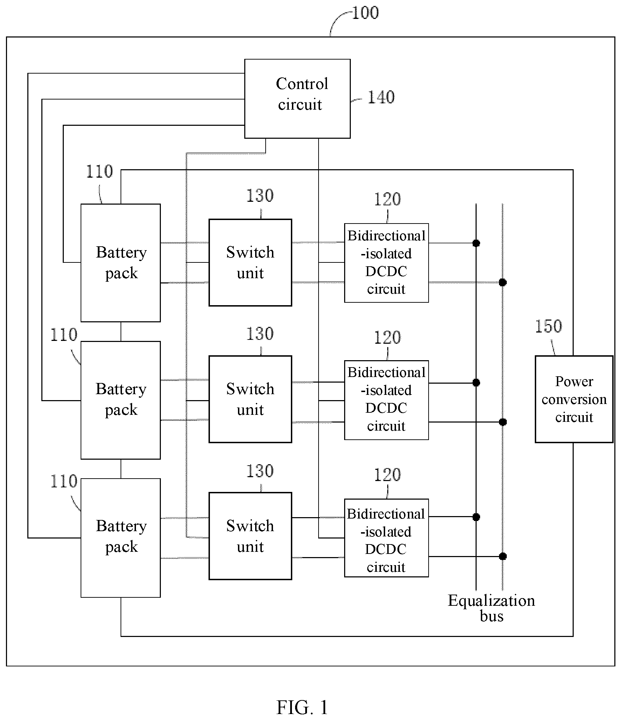

Reference to FIG. 1, FIG. 1 is a schematic block diagram of a series-connected battery pack system according to an embodiment of the present application, and the series-connected battery pack system 100 includes: n battery packs 110, n bidirectional-isolated DCDC circuits 120, n switch units 130, a control circuit 140 and a power conversion circuit 150, where n is a positive integer greater than or equal to 2 (in an example shown in the figure, n is 3).

In the embodiments of the present application, the n battery packs 110 are connected in series and then connected to a bus of the series-connected battery pack system 100, so as to connect to the power conversion circuit 150 through the bus. The n battery pack 110 are connected to the n bidirectional-isolated DCDC circuits 120 through the n switch units 130, respectively, the n bidirectional-isolated DCDC circuits 120 are connected to an equalization bus, and the control circuit 140 is connected to the n battery packs 110, the n bidirectional-isolated DCDC circuits 120 and the n switch units 130.

The control circuit 140 is configured to: enter an equalization state when it is determined that a SOC difference between any battery packs 110 is greater than a preset difference; during a current equalization cycle, determine a first battery pack 110 having a highest SOC value and a first voltage value of the first battery pack 110, determine a second battery pack 110 having a lowest SOC value and a second voltage value of the second battery pack 110, and when the first voltage value and the second voltage value meet a first condition, control both a switch unit 130 corresponding to the first battery pack 110 and a switch unit 130 corresponding to the second battery pack 110 to turn on, and control the first battery pack 110 to charge the second battery pack 110 through a corresponding bidirectional-isolated DCDC circuit 120; enter a next equalization cycle when it is determined that real-time SOC values of all battery packs 110 meet a second condition; and terminate the equalization state when it is determined that the SOC difference between any battery packs 110 is less than or equal to the preset difference.

In the embodiments of the present application, the control circuit 140 may include a controller and an auxiliary power source. The auxiliary power source is connected to the bus of the series-connected battery pack system 100. After the series-connected battery pack system 100 is activated, the auxiliary power source draws electrical energy from the bus and convert the electrical energy into an auxiliary supply voltage, so as to provide auxiliary power to the controller, and the controller is activated and performs the aforementioned functions after receiving the auxiliary supply voltage.

The battery pack 110 includes a battery cell unit and a battery management unit, the battery cell unit is configured to store electrical energy, and the battery management unit is configured to collect operating information of the battery cell unit, for example, the battery management unit may collect a voltage value, a temperature, and a SOC (State of Charge) value of the battery cell unit in real time. The above controller may be a programmable microprocessor and peripheral circuits thereof, and the controller is connected to the battery management unit of each battery pack 110 through a communication bus, so as to obtain the SOC value, the voltage value, or the like of the battery pack 110 in real time, which serve as data sources for an equalization strategy. The controller may monitor SOC differences between various SOC values, and enter the above equalization state when it is determined that the SOC difference between any battery packs 110 is greater than the preset difference. For example, the controller enters the equalization state when monitoring that the SOC difference between any two battery packs 110 is greater than 5, where a range of the SOC value in this example is from 0 to 100.

It should be understood that after entering the equalization state, the control circuit 140 may perform mutual charge equalization on two battery packs 110 within the current equalization cycle, that is, the battery pack 110 having the highest SOC value may be used to charge the battery pack 110 having the lowest SOC value. Therefore, after entering the equalization state, the control circuit 140 may also sort the SOC values of various battery packs 110. For example, the SOC values are sorted in descending order, and then the highest SOC value and the lowest SOC value are determined, so as to determine the above first battery pack 110 and the above second battery pack 110. The series-connected battery pack system 100 may also enter the above equalization state even during a normal charge or discharge operating state. In the equalization state, the first battery pack 110 and the second battery pack 110 may not participate in a normal discharge or charge operation of the series-connected battery pack system 100, or during an equalization process, the first battery pack 110 and the second battery pack 110 may also not participate in a normal discharge or charge operation of the series-connected battery pack system 100 at the same time, which is not limited here.

In some embodiments, the above first condition includes: at least one of the first voltage value and the second voltage value being not greater than a preset voltage threshold. That is, when determining the first battery pack 110 and the second battery pack 110 and controlling the first battery pack 110 to charge the second battery pack 110, the control circuit 140 further monitors the first voltage value of the first battery pack 110 and the second voltage value of the second battery pack 110 in real time. If the at least one of the first voltage value and the second voltage value is less than or equal to the preset voltage threshold, the control circuit 140 continues to control the first battery pack 110 to perform the charge equalization on the second battery pack 110. If, during an equalization process, both the first voltage value and the second voltage value are greater than the preset voltage value, the control circuit 140 control to terminate the charge equalization from the first battery pack 110 to the second battery pack 110, thereby preventing a risk of overvoltage of a battery pack due to a continuous increase in terminal voltage of the battery pack during an equalization process. The preset voltage threshold may be an overvoltage protection value of the battery pack 110.

In some embodiments, when terminating the charge equalization from the first battery pack 110 to the second battery pack 110, the control circuit 140 may control the switch unit 130 corresponding to the second battery pack 110 to turn off, control a bidirectional-isolated DCDC circuit 120 corresponding to the second battery pack 110 to stop operating, and determine another target battery pack 110 having a relatively low SOC value from various SOC values, so as to control a switch unit 130 corresponding to the target battery pack 110 to turn on and a bidirectional-isolated DCDC circuit 120 corresponding to the target battery pack 110 to operate, thereby controlling the first battery pack 110 to perform the charge equalization on the target battery pack 110. The target battery pack 110 may be a battery pack 110 having a second-lowest SOC value determined at beginning of the current equalization cycle.

In the embodiments of the present application, the second condition includes: a SOC value of the first battery pack 110 being less than a SOC value of a third battery pack 110, and the third battery pack 110 being a battery pack 110 having a second-highest SOC value determined at beginning of the current equalization cycle, or a SOC value of the second battery pack 110 being greater than a SOC value of a fourth battery pack 110, and the fourth battery pack 110 being a battery pack 110 having a second-lowest SOC value determined at beginning of the current equalization cycle.

For example, after sorting the SOC values in descending order at the beginning of the current equalization cycle, the control circuit 140 may determine the first battery pack 110 having the highest SOC value, the third battery pack 110 having the second-highest SOC value, the second battery pack 110 having the lowest SOC value, and the fourth battery pack 110 having the second-lowest SOC value. When controlling the first battery pack 110 to perform the charge equalization on the second battery pack 110, the control circuit 140 also monitors whether the SOC value of the first battery pack 110 is less than the SOC value of the third battery pack 110, and whether the SOC value of the second battery pack 110 is greater than the SOC value of the fourth battery pack 110. When the SOC value of the first battery pack 110 is less than the SOC value of the third battery pack 110 by a preset value, or when the SOC value of the second battery pack 110 is greater than the SOC value of the fourth battery pack 110 by a preset value, the control circuit 140 enters a new equalization cycle. In the scenario where the SOC value ranges from 0 to 100, the preset value may be, for example, 3, etc., which is not limited here.

It should be understood that, in the series-connected battery pack system 100 according to the embodiments of the present application, a switch unit 130 and a bidirectional-isolated DCDC circuit 120 are set for each battery pack 110, such that each battery pack 110 is connected to the equalization bus through the switch unit 130 and the bidirectional-isolated DCDC circuit 120. After entering the equalization state, the control circuit 140 may, as required, control the first battery pack 110 having the highest SOC value to discharge to the equalization bus through the bidirectional-isolated DCDC circuit 120, and control the second battery pack 110 having the lowest SOC value to receive the voltage from the equalization bus for charging through the bidirectional-isolated DCDC circuit 120, so as to realize a function of the first battery pack 110 having the highest SOC value performing active charge equalization on the second battery pack 110 having the lowest SOC value, thereby reducing time required for equalization between battery packs, and improving balancing effectiveness and an energy utilization rate. Moreover, during an equalization process, the first voltage value of the first battery pack 110 and the second voltage value of the second battery pack 110 being equalized are also monitored, and the equalization process is continued only when the first voltage value and the second voltage value meet the preset condition, thereby avoiding abnormal voltages of battery packs due to an equalization process, and further preventing a normal operating state of a series-connected battery pack system from being affected .

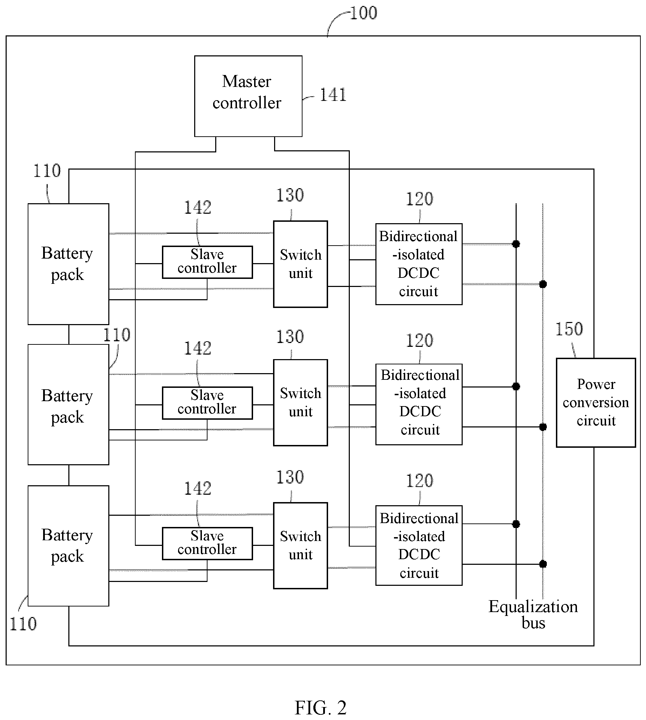

In some embodiments, as shown in FIG. 2, the control circuit 140 includes a master controller 141 and n slave controllers 142, and each slave controller 142 is connected to the master controller 141, a corresponding battery pack 110 and a corresponding switch unit 130.

The slave controller 142 is configured to: obtain a SOC value and a voltage value of the corresponding battery pack 110, and transmit the SOC value and the voltage value to the master controller 141, and in response to a turn-on command from the master controller 141, control the corresponding switch unit 130 to turn on. That is, the slave controller 142 is connected to a battery management unit of the corresponding battery pack 110 to obtain information of the corresponding battery pack 110 collected by the battery management unit in real time, and transmit the SOC value and the voltage value in the information to the master controller 141. Moreover, the slave controller 142 controls the corresponding switch unit 130 to turn on after receiving the turn-on command from the master controller 141, and controls the corresponding switch unit 130 to turn off after receiving a turn-off command from the master controller 141.

The master controller 141 is configured to: receive SOC values and voltage values of all battery packs 110; enter the equalization state when it is determined that the SOC difference between any SOC values is greater than a preset difference; during the current equalization cycle, determine the first battery pack 110 having the highest SOC value and the first voltage value of the first battery pack 110, determine the second battery pack 110 having the lowest SOC value and the second voltage value of the second battery pack 110, and when the first voltage value and the second voltage value meet the first condition, transmit the turn-on command to slave controllers 142 corresponding to the first battery pack 110 and the second battery pack 110, and control the first battery pack 110 to charge the second battery pack 110 through the corresponding bidirectional-isolated DCDC circuit 120; enter the next equalization cycle when it is determined that the real-time SOC values of all battery packs 110 meet the second condition; and terminate the equalization state when it is determined that the SOC difference between any battery packs 110 is less than or equal to the preset difference.

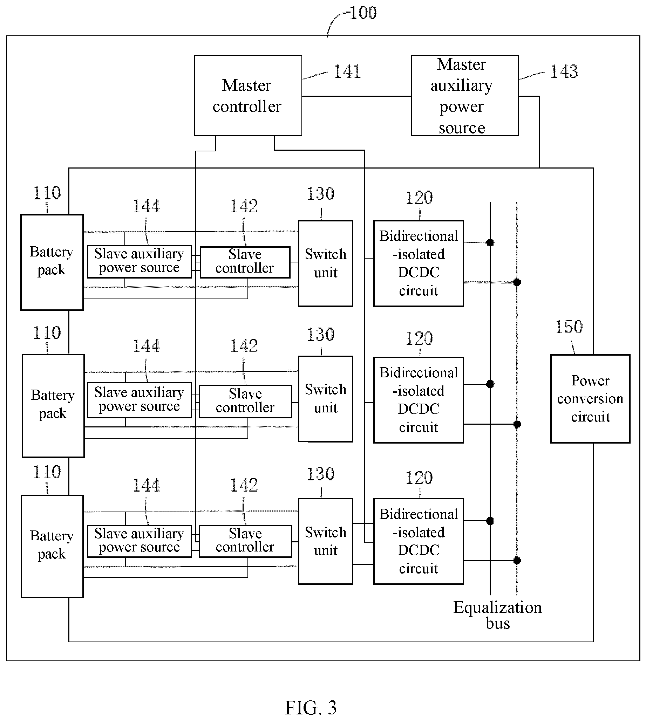

In some embodiments, as shown in FIG. 3, the control circuit 140 further includes a master auxiliary power source 143 and n slave auxiliary power sources 144. The master auxiliary power source 143 is connected to the bus and the master controller 141, and each slave auxiliary source 144 is connected to a corresponding battery pack 110 and a corresponding slave controller 142.

The master auxiliary power source 143 is configured to convert a bus voltage of the bus into an auxiliary power supply voltage, and transmit the auxiliary power supply voltage to the master controller 141. The slave auxiliary source 144 is configured to convert a voltage of the corresponding battery pack 110 into an auxiliary power supply voltage, and transmit the auxiliary power supply voltage to the corresponding slave controller 142.

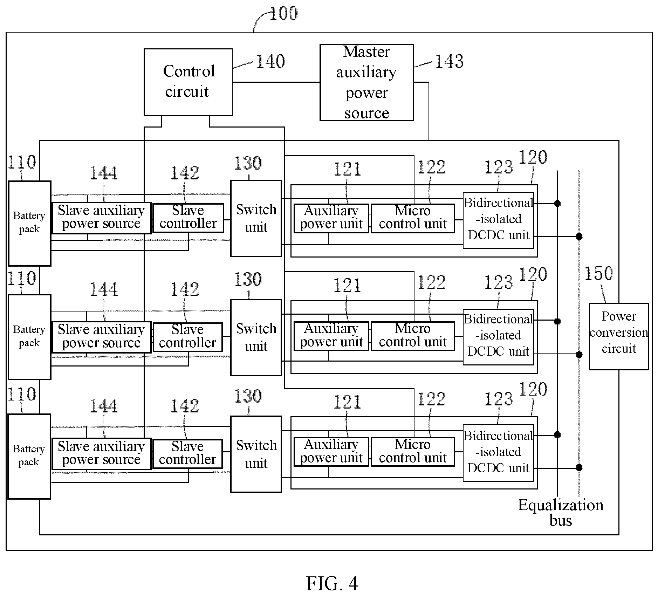

In some embodiments, as shown in FIG. 4, the bidirectional-isolated DCDC circuit 120 includes an auxiliary power unit 121, a micro control unit 122 and a bidirectional-isolated DCDC unit 123. The auxiliary power unit 121 is connected to a corresponding switch unit 130 and the micro control unit 122, the micro control unit 122 is connected to the control circuit 140 and the bidirectional-isolated DCDC unit 123, and the bidirectional-isolated DCDC unit 123 is connected to the corresponding switch unit 130 and the equalization bus.

The auxiliary power unit 121 is configured to convert a voltage of a corresponding battery pack 110 into an auxiliary power supply voltage after the corresponding switch unit 130 is turned on, and transmit the auxiliary power supply voltage to the micro control unit 122. The micro control unit 122 is configured to control the bidirectional-isolated DCDC unit 123 to enter either a discharge operating state or a charge operating state after receiving the auxiliary power supply voltage and an activating command from the control circuit 140. The bidirectional-isolated DCDC unit 123 is configured to convert the voltage of the corresponding battery pack 110 into a discharge voltage and output the discharge voltage to the equalization bus in the discharge operating state, and convert a bus voltage of the equalization bus into a charge voltage and output the charge voltage to the corresponding battery pack 110 in the charge operating state.

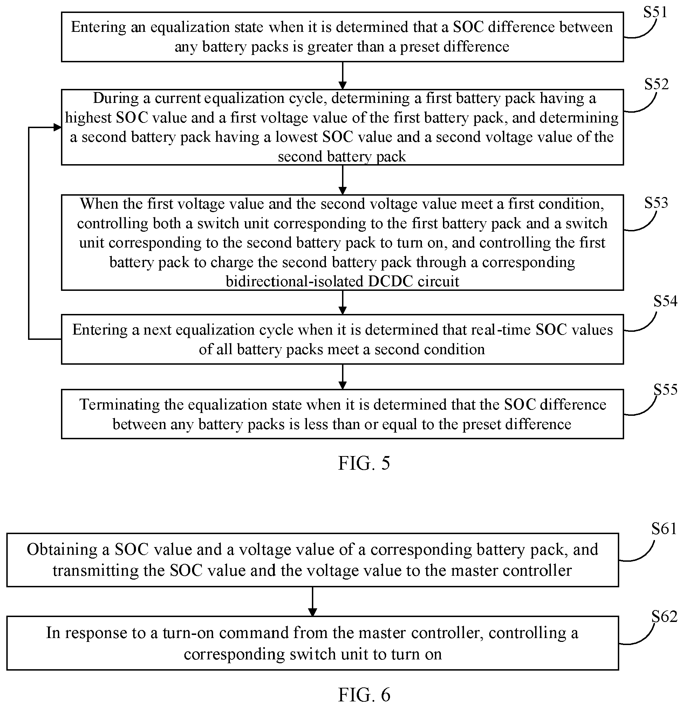

Reference to FIG. 5, FIG. 5 is a schematic flowchart of a method for equalizing a series-connected battery pack system according to an embodiment of the present application, and the method is applicable to the series-connected battery pack system in any of the embodiments mentioned above. The method specifically includes the following steps.

Step S51: entering an equalization state when it is determined that a SOC difference between any battery packs is greater than a preset difference.

Step S52: during a current equalization cycle, determining a first battery pack having a highest SOC value and a first voltage value of the first battery pack, and determining a second battery pack having a lowest SOC value and a second voltage value of the second battery pack.

Step S53: when the first voltage value and the second voltage value meet a first condition, controlling both a switch unit corresponding to the first battery pack and a switch unit corresponding to the second battery pack to turn on, and controlling the first battery pack to charge the second battery pack through a corresponding bidirectional-isolated DCDC circuit.

Step S54: entering a next equalization cycle when it is determined that real-time SOC values of all battery packs meet a second condition.

Step S55: terminating the equalization state when it is determined that the SOC difference between any battery packs is less than or equal to the preset difference.

In some embodiments, the above first condition includes: at least one of the first voltage value and the second voltage value being not greater than a preset voltage threshold.

In some embodiments, the above second condition includes: a SOC value of the first battery pack being less than a SOC value of a third battery pack, and the third battery pack being a battery pack having a second-highest SOC value determined at beginning of the current equalization cycle; or a SOC value of the second battery pack being greater than a SOC value of a fourth battery pack, and the fourth battery pack being a battery pack having a second-lowest SOC value determined at beginning of the current equalization cycle.

In some embodiments, the control circuit of the series-connected battery pack system includes a master controller and n slave controllers, and the n slave controllers correspond to the n battery packs, respectively. As shown in FIG. 6, when the method is executed, each slave controller executes the following steps.

Step S61: obtaining a SOC value and a voltage value of a corresponding battery pack, and transmitting the SOC value and the voltage value to the master controller.

Step S62: in response to a turn-on command from the master controller, controlling a corresponding switch unit to turn on.

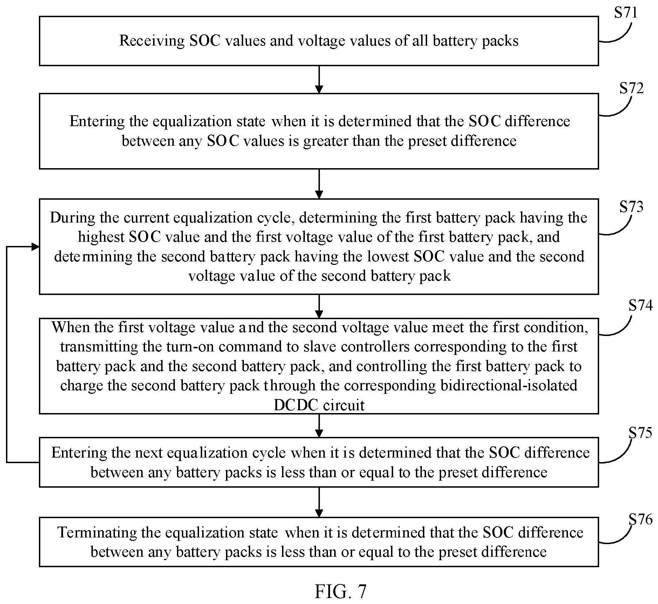

As shown in FIG. 7, when the method is executed, the master controller executes the following steps.

Step S71: receiving SOC values and voltage values of all battery packs.

Step S72: entering the equalization state when it is determined that the SOC difference between any SOC values is greater than the preset difference.

Step S73: during the current equalization cycle, determining the first battery pack having the highest SOC value and the first voltage value of the first battery pack, and determining the second battery pack having the lowest SOC value and the second voltage value of the second battery pack.

Step S74: when the first voltage value and the second voltage value meet the first condition, transmitting the turn-on command to slave controllers corresponding to the first battery pack and the second battery pack, and controlling the first battery pack to charge the second battery pack through the corresponding bidirectional-isolated DCDC circuit.

Step S75: entering the next equalization cycle when it is determined that the real-time SOC values of all battery packs meet the second condition.

Step S76: terminating the equalization state when it is determined that the SOC difference between any battery packs is less than or equal to the preset difference.

It should be understood that the specific implementation content and beneficial effects of the above method may refer to the corresponding content of the series-connected battery pack system in any of the aforementioned embodiments, and will not be repeated here.

The embodiments of the present application also provide a computer storage medium, the computer storage medium stores a computer program, and when the computer program is executed by a processor, the processor is caused to execute the above method.

In the above embodiments, the implementations may be carried out entirely or partially through software, hardware, firmware, or any combination thereof. When carried out through software, the implementations may be carried out entirely or partially in a form of a computer program product. The computer program product includes one or more computer program instructions. When loaded and implemented on a computer, the computer program instructions generate all or part of the processes or functions described in the embodiments of the present application. The computer may be a general-purpose computer, a dedicated computer, a computer network or other programmable devices. The computer program instructions may be stored in the computer storage medium or transmitted through the computer storage medium, and the computer program instructions may be transmitted from one website, computer, server, or data center to another website, computer, server, or data center through wired means (for example, coaxial cable, optical fiber, DSL (Digital Subscriber Line)) or wireless means (for example, infrared, radio, microwave, etc.). The computer storage medium may be any available medium that the computer can access or a data storage device such as a server or data center that integrates one or more available medium. The available medium may be a magnetic medium (for example, floppy disk, hard disk, magnetic tape), an optical medium (for example, DVD (Digital Versatile Disc)), or a semiconductor medium (for example, SSD (Solid State Disk)), or the like.

Those skilled in the art should understand that all or part of the processes of the method in the above embodiments may be completed by a computer program instructing relevant hardware. The computer program may be stored in a computer-readable storage medium, and the computer program may include the processes of the method in the above embodiments when being executed. The foregoing storage medium includes various medium that store program codes, such as ROM, RAM, magnetic disks or optical disks. In a case of no conflict, the technical features in the embodiments and the implementations may be combined arbitrarily.

The foregoing embodiments are merely described as preferred embodiments, but not intend to limit the scope of the present application. Any modifications and improvements made by those skilled in the art to the technical solutions of the present application should fall within the protection scope determined by the claims of the present application.

## Claims

1. A series-connected battery pack system, comprising n battery packs, n bidirectional-isolated DCDC circuits, n switch units and a control circuit, wherein n is a positive integer greater than or equal to 2;
the n battery packs are connected in series and then connected to a bus of the series-connected battery pack system, the n battery pack are connected to the n bidirectional-isolated DCDC circuits through the n switch units, respectively, the n bidirectional-isolated DCDC circuits are connected to an equalization bus, and the control circuit is connected to the n battery packs, the n bidirectional-isolated DCDC circuits and the n switch units; and
the control circuit is configured to:
enter an equalization state when it is determined that a State of Charge SOC difference between any battery packs is greater than a preset difference;
during a current equalization cycle, determine a first battery pack having a highest SOC value and a first voltage value of the first battery pack, determine a second battery pack having a lowest SOC value and a second voltage value of the second battery pack, and when the first voltage value and the second voltage value meet a first condition, control both a switch unit corresponding to the first battery pack and a switch unit corresponding to the second battery pack to turn on, and control the first battery pack to charge the second battery pack through a corresponding bidirectional-isolated DCDC circuit;
enter a next equalization cycle when it is determined that real-time SOC values of all battery packs meet a second condition; and
terminate the equalization state when it is determined that the SOC difference between any battery packs is less than or equal to the preset difference.

2. The series-connected battery pack system according to claim 1, wherein the control circuit comprises a master controller and n slave controllers, and each of the n slave controllers is connected to the master controller, a corresponding battery pack and a corresponding switch unit; and
the slave controller is configured to:
obtain a SOC value and a voltage value of the corresponding battery pack, and transmit the SOC value and the voltage value to the master controller; and
in response to a turn-on command from the master controller, control the corresponding switch unit to turn on.

3. The series-connected battery pack system according to claim 2, wherein the master controller is configured to:
receive SOC values and voltage values of all battery packs;
enter the equalization state when it is determined that the SOC difference between any SOC values is greater than the preset difference;
during the current equalization cycle, determine the first battery pack having the highest SOC value and the first voltage value of the first battery pack, determine the second battery pack having the lowest SOC value and the second voltage value of the second battery pack, and when the first voltage value and the second voltage value meet the first condition, transmit the turn-on command to slave controllers corresponding to the first battery pack and the second battery pack, and control the first battery pack to charge the second battery pack through the corresponding bidirectional-isolated DCDC circuit;
enter the next equalization cycle when it is determined that the real-time SOC values of all battery packs meet the second condition; and
terminate the equalization state when it is determined that the SOC difference between any battery packs is less than or equal to the preset difference.

4. The series-connected battery pack system according to claim 2 or 3, wherein the control circuit further comprises a master auxiliary power source and n slave auxiliary power sources, the master auxiliary power source is connected to the bus and the master controller, and each of the n slave auxiliary power sources is connected to a corresponding battery pack and a corresponding slave controller;
the master auxiliary power source is configured to convert a bus voltage of the bus into an auxiliary power supply voltage, and transmit the auxiliary power supply voltage to the master controller; and
the slave auxiliary power source is configured to convert a voltage of the corresponding battery pack into an auxiliary power supply voltage, and transmit the auxiliary power supply voltage to the corresponding slave controller.

5. The series-connected battery pack system according to any one of claims 1 to 4, wherein the first condition comprises: at least one of the first voltage value and the second voltage value being not greater than a preset voltage threshold.

6. The series-connected battery pack system according to any one of claims 1 to 5, wherein the second condition comprises:
a SOC value of the first battery pack being less than a SOC value of a third battery pack, and the third battery pack being a battery pack having a second-highest SOC value determined at beginning of the current equalization cycle; or
a SOC value of the second battery pack being greater than a SOC value of a fourth battery pack, and the fourth battery pack being a battery pack having a second-lowest SOC value determined at beginning of the current equalization cycle.

7. The series-connected battery pack system according to any one of claims 1 to 6, wherein each of the n bidirectional-isolated DCDC circuits comprises an auxiliary power unit, a micro control unit and a bidirectional-isolated DCDC unit, the auxiliary power unit is connected to a corresponding switch unit and the micro control unit, the micro control unit is connected to the control circuit and the bidirectional-isolated DCDC unit, and the bidirectional-isolated DCDC unit is connected to the corresponding switch unit and the equalization bus;
the auxiliary power unit is configured to convert a voltage of a corresponding battery pack into an auxiliary power supply voltage after the corresponding switch unit is turned on, and transmit the auxiliary power supply voltage to the micro control unit;
the micro control unit is configured to control the bidirectional-isolated DCDC unit to enter either a discharge operating state or a charge operating state after receiving the auxiliary power supply voltage and a start command from the control circuit; and
the bidirectional-isolated DCDC unit is configured to convert the voltage of the corresponding battery pack into a discharge voltage and output the discharge voltage to the equalization bus in the discharge operating state, and convert a bus voltage of the equalization bus into a charge voltage and output the charge voltage to the corresponding battery pack in the charge operating state.

8. The series-connected battery pack system according to any one of claims 1 to 7, wherein the control circuit is further configured to:
when the first voltage value and the second voltage value do not meet the first condition, control the switch unit corresponding to the second battery pack to turn off and a bidirectional-isolated DCDC circuit corresponding to the second battery pack to stop operating, determine a target battery pack having a second-lowest SOC value determined at beginning of the current equalization cycle, control a switch unit corresponding to the target battery pack to turn on and a bidirectional-isolated DCDC circuit corresponding to the target battery pack to operate, and control the first battery pack to charge the target battery pack.

9. A method for equalizing a series-connected battery pack system, wherein the series-connected battery pack system comprises n battery packs, n bidirectional-isolated DCDC circuits and n switch units, and n is a positive integer greater than or equal to 2;
the n battery packs are connected in series and then connected to a bus of the series-connected battery pack system, the n battery pack are connected to the n bidirectional-isolated DCDC circuits through the n switch units, respectively, and the n bidirectional-isolated DCDC circuits are connected to an equalization bus; and
the method comprises:
entering an equalization state when it is determined that a SOC difference between any battery packs is greater than a preset difference;
during a current equalization cycle, determining a first battery pack having a highest SOC value and a first voltage value of the first battery pack, determining a second battery pack having a lowest SOC value and a second voltage value of the second battery pack, and when the first voltage value and the second voltage value meet a first condition, controlling both a switch unit corresponding to the first battery pack and a switch unit corresponding to the second battery pack to turn on, and controlling the first battery pack to charge the second battery pack through a corresponding bidirectional-isolated DCDC circuit;
entering a next equalization cycle when it is determined that real-time SOC values of all battery packs meet a second condition; and
terminating the equalization state when it is determined that the SOC difference between any battery packs is less than or equal to the preset difference.

10. The method according to claim 9, wherein the first condition comprises: at least one of the first voltage value and the second voltage value being not greater than a preset voltage threshold.

11. The method according to claim 9 or 10, wherein the second condition comprises:
a SOC value of the first battery pack being less than a SOC value of a third battery pack, and the third battery pack being a battery pack having a second-highest SOC value determined at beginning of the current equalization cycle; or
a SOC value of the second battery pack being greater than a SOC value of a fourth battery pack, and the fourth battery pack being a battery pack having a second-lowest SOC value determined at beginning of the current equalization cycle.

12. The method according to any one of claims 9 to 11, wherein the series-connected battery pack system further comprises a master controller and n slave controllers, and each of the n slave controllers is connected to the master controller, a corresponding battery pack and a corresponding switch unit; and
the method is implemented by the master controller, and the method further comprises:
obtaining, by the slave controller, a SOC value and a voltage value of the corresponding battery pack, transmitting, by the slave controller, the SOC value and the voltage value to the master controller, and in response to a turn-on command from the master controller, controlling, by the slave controller, the corresponding switch unit to turn on; and
receiving, by the master controller, SOC values and voltage values of all battery packs.

13. The method according to claim 12, wherein the series-connected battery pack system further comprises a master auxiliary power source and n slave auxiliary power sources, the master auxiliary power source is connected to the bus and the master controller, and each of the n slave auxiliary power sources is connected to a corresponding battery pack and a corresponding slave controller;
the master auxiliary power source is configured to convert a bus voltage of the bus into an auxiliary power supply voltage, and transmit the auxiliary power supply voltage to the master controller; and
the slave auxiliary power source is configured to convert a voltage of the corresponding battery pack into an auxiliary power supply voltage, and transmit the auxiliary power supply voltage to the corresponding slave controller.

14. The method according to any one of claims 9 to 13, wherein each of the n bidirectional-isolated DCDC circuits comprises an auxiliary power unit, a micro control unit and a bidirectional-isolated DCDC unit, the auxiliary power unit is connected to a corresponding switch unit and the micro control unit, the micro control unit is connected to the control circuit and the bidirectional-isolated DCDC unit, and the bidirectional-isolated DCDC unit is connected to the corresponding switch unit and the equalization bus;
the auxiliary power unit is configured to convert a voltage of a corresponding battery pack into an auxiliary power supply voltage after the corresponding switch unit is turned on, and transmit the auxiliary power supply voltage to the micro control unit;
the micro control unit is configured to control the bidirectional-isolated DCDC unit to enter either a discharge operating state or a charge operating state after receiving the auxiliary power supply voltage and a start command from the control circuit; and
the bidirectional-isolated DCDC unit is configured to convert the voltage of the corresponding battery pack into a discharge voltage and output the discharge voltage to the equalization bus in the discharge operating state, and convert a bus voltage of the equalization bus into a charge voltage and output the charge voltage to the corresponding battery pack in the charge operating state.

15. A computer storage medium, wherein the computer storage medium stores a computer program, and when the computer program is executed by a processor, the processor is caused to execute the method for equalizing the series-connected battery pack system according to any one of claims 9 to 14.
